# EUROPÄISCHE PATENTSCHRIFT

(11) **EP 1 249 487 B1**
(45) Veröffentlichungstag und Bekanntmachung des Hinweises auf die Patenterteilung: **23.11.2005**
(21) Anmeldenummer: 02006434.1
(22) Anmeldetag: 22.03.2002
(51) Int. Cl.: C11B 15/00, A23D 9/05, A23G 1/04, A23G 1/00, A23L 3/36

(54) **Verfahren und Verwendung einer Vorrichtung zur Herstellung von Partikeln aus Schokolade**
Method and use of an apparatus for making chocolate particles
Procédé et utilisation d'un appareil pour la fabrication de particules de chocolat

(30) Priorität: 14.04.2001 DE 10118700
(43) Veröffentlichungstag der Anmeldung: 16.10.2002
(73) Patentinhaber: FRANZ ZENTIS GMBH & CO., 52070 Aachen (DE)
(72) Erfinder: Baumer, Johannes, 4710 Lontzen (BE); Becker, Jürgen, Dr., 52477 Alsdorf (DE); Otte, Dietmar, Dipl.-Ing., 52076 Aachen (DE); Stauber, Dieter, Dr., 52134 Herzogenrath (DE)
(74) Vertreter: Bauer, Dirk

(56) Entgegenhaltungen:
- EP-A- 0 198 538
- EP-A- 0 617 248
- WO-A-01/33979
- DE-A- 1 467 722
- FR-A- 2 638 066
- GB-A- 821 995
- GB-A- 2 023 789
- NL-A- 7 506 701
- US-A- 3 765 189
- US-A- 3 950 561
- US-A- 4 319 460
- DATABASE WPI Section Ch, Week 197617 Derwent Publications Ltd., London, GB; Class D11, AN 1976-30886X XP002205926 & JP 51 028809 A (ASAHI DENKA KOGYO KK), 11. März 1976 (1976-03-11)

## Beschreibung

Die Erfindung betrifft ein Verfahren zur Herstellung von Partikeln aus Schokolade, wobei die in flüssiger Form vorliegende Schokolade in Form eines Films oder in Form von Streifen auf eine Oberfläche einer rotierenden Kühlwalze oder eines bewegten Kühlbandes aufgebracht wird und anschließend eine Ablösung der zumindest teilweise ausgehärteten Schokolade von der Oberfläche der Kühlwalze oder des Kühlbandes erfolgt, und wobei im Fall einer Erzeugung eines endlosen Films oder endloser Streifen nach der Aushärtung der Schokolade eine Zerkleinerung auf die gewünschte Partikelgröße erfolgt. Des weiteren betrifft die Erfindung die Verwendung einer Vorrichtung zur Durchführung eines derartigen Verfahrens.

Es ist allgemein bekannt, bei Verfahren zur Herstellung von Schokoladenpartikeln, die flüssige Schokolade mit einer Temperatur von ca. 30°C bis 40°C auf eine gekühlte Oberfläche zunächst in Form einer Kühlwalze aufzubringen. Die Oberflächentemperatur der Kühlwalze beträgt im Moment des Kontakts mit der flüssigen Schokolade ca. 5°C bis 10°C. Mit Hilfe einer Kalibrierwalze kann die Dicke des sich auf der Kühlwalze ausbildenden Schokoladenfilmes eingestellt werden. Nach der Aufgabe der Schokolade auf die Kühlwalze findet zunächst im Bereich der Kontaktfläche eine Kristallisation der Schokolade in Form einer dünnen Schicht statt. Des weiteren kommt es ausgehend von der der Kühlwalze abgewandten Oberfläche des Schokoladenfilms zu einer beginnenden Kristallisation aufgrund des dort stattfindenden konvektiven Wärmeübergangs auf das umgebende gasförmige Medium, dessen Temperatur bei 10°C bis 20°C liegt.

Der Schokoladenfilm verläßt die Kühlwalze bei den bekannten Verfahren in einem nur von den Rändern her, d. h. nur teilweise auskristallisierten Zustand und wird anschließend auf der Oberfläche eines Kühlbandes abgelegt, das durch einen ca 10 Meter bis 30 Meter langen Kühltunnel hindurchgeführt wird. Durch den Kühltunnel wird im Gegenstrom kalte Luft mit einer Temperatur von ca. 10°C bis 15°C hindurch geleitet.

Wesentlich für die Herstellung qualitativ hochwertiger Schokoladenpartikel ist die Einhaltung bestimmter Vorgaben während des Abkühlprozesses der Schokolade. So darf der Temperaturgradient einen bestimmten Betrag nicht übersteigen, da sich sonst eine nicht erwünschte Kristallstrukrur in dem Endprodukt ergibt. Nur durch Abkühlung mit einem sehr geringen Temperaturgradienten läßt sich das angestrebte Gefüge der Fettkristalle erreichen, das der ausgehärteten Schokolade den gewünschten Glanz und die gewünschte Beständigkeit gegen Fettreitbildung verleiht. Aufgrund der kleinen Temperaturgradienten ergeben sich große Durchlaufzeiten durch die Kühlstrecken, woraus bei einer gegebenen Mindesttransportgeschwindigkeit der auszuhärtenden Schokolade verhältnismäßig große bauliche Abmessungen der Kühlstrecken ergeben. Der Raumbedarf für Vorrichtungen die nach Verfahren gemäß dem Stand der Technik arbeiten, ist somit sehr groß, was wiederum zu hohen Investitions- und Unterhaltungskosten während des Betriebs führt.

In der jüngeren Vergangenheit ist des weiteren zunehmend das Bedürfnis bei den Verwendern derartiger Schokopartikel aufgekommen, diese Partikel auch in wässrigen, nicht gefrorenen Medien wie beispielsweise Joghurt oder Süßdesserts einzusetzen. Um Probleme mit der Mikrobiologie auch nach einer gewissen Lagerungszeit zu vermeiden, ist eine möglichst geringe Anzahl von Keimen in der Schokolade anzustreben. Da Röhkakao von Natur aus eine vergleichsweise starke, bei der Verarbeitung zu Schokolade aber an sich unschädliche Verkeimung besitzt, ist eine Keimreduzierung der flüssigen Schokolade beispielsweise durch Pasteurisierung oder Sterilisierung erforderlich. Das Ziel von keimarmen Schokoladenpartikeln kann jedoch nur dann erreicht werden, wenn bei der Partikelausformung eine anschließende neue Verkeimung unterbunden werden kann. Bei den Verfahren nach dem Stand der Technik und den zugehörigen Vorrichtungen mit ihren erheblichen Baugrößen ist die Sicherstellung einer Keimarmut oder gar Keimfreiheit mit wirtschaftlich vertretbaren Maßnahmen kaum zu erreichen. So ist es kostenmäßig nicht darstellbar, die gesamte Partikelausformung unter Reinraumbedingungen, wie beispielsweise im Pharmabereich üblich, durchzuführen.

Aus der EP 0 976 333 A2 ist ein alternatives Verfahren zur Herstellung von Partikeln eines Lebensmittels bekannt. Hierbei findet eine Vertropfung des flüssigen Lebensmittels an einem Düsenstock statt, wonach die Tropfen eine Fallstrecke innerhalb eines ca. 10 bis 15 m hohen Fallturms durchfallen. Durch den Fallturm wird im Gegenstrom zu den fallenden Lebensmitteltropfen ein Kühlgas geleitet. Am Ende der Fallstrecke sind die Lebensmittelpartikel zumindest soweit ausgehärtet, daß sie beim Auftreffen nicht mehr plastisch verformbar sind. Wird das auszuformende Lebensmittel bei der Vertropfung in sterilisierter oder pasteurisierter Form zugeführt, so lassen sich sterile bzw. pasteurisierte Partikel erzeugen, wenn der Fallturm vor Aufnahme der Produktion gleichfalls sterilisiert bzw. pasteurisiert wurde. Nachteilig bei dem bekannten Verfahren ist einerseits die vergleichsweise geringe Produktionskapazität und zum anderen der sehr große Bauaufwand, insbesondere die unverzichtbar große Ausdehnung in vertikale Richtung.

Die GB 2 023 789 A betrifft eine gekapselte Vorrichtung, bestehend aus einer Kühlwalze und einer Dosiereinrichtung, die die Ausformung von diskreten Partikeln aus einer Paste, die aus dem Fleisch von Scampi besteht, behandelt. Hinweise über eine Verwendung für die Herstellung von Schokoladen- oder ähnlichen Süßwarenartikeln fehlen.

Die EP 0 617 248 A1 offenbart ein Verfahren zur Herstellung von gefrorenen Partikeln eines flüssigen oder festen Lebensmittels, wobei eine Kühlscheibe benutzt wird, auf die das Produkt aus Düsen heraus aufgebracht wird. Mit Hilfe von Schabern wird das ausgehärtete Produkt von der rotierenden Kühlscheibe entfernt.

Die EP 0 198 538 A beschreibt die Aushärtung von flüssigem Fett auf einem tiefgekühltem Kühlband. Schließlich beschreibt die GB 821 995 A die Aushärtung von flüssigem Fett auf einer Kühlwalze.

Der Erfindung liegt die Aufgabe zugrunde, ein Verfahren der oben beschriebenen Art so weiter zu entwickeln, daß auf kostengünstige Weise die Herstellung pasteurisierter oder sterilisierter Schokoladenpartikel möglich ist.

Ausgehend von einem Verfahren der eingangs beschriebenen Art wird diese Aufgabe erfindungsgemäß dadurch gelöst, daß die Aufgabe und zumindest teilweise Aushärtung der in flüssiger, sterilisierter oder pasteurisierter Form vorliegenden Schokolade innerhalb eines abgeschlossenen, sterilisierbaren oder pasteurisierbaren Behältnisses erfolgt und die Oberfläche der Kühlwalze oder des Kühlbandes im Bereich der Aufgabe der Schokolade kleiner als 0°C und/oder die Temperatur eines die Kühlwalze oder das Kühlband umgebenden Gases im Bereich der Aufgabe der Schokolade kleiner als 0°C ist.

Aufgrund der sehr geringen Oberflächentemperatur der Kühlwalze oder des Kühlbandes und/oder der sehr niedrigen Umgebungstemperatur läßt sich bei dem erfindungsgemäßen Verfahren eine sehr rasche Abkühlung des Schokolade erreichen. Dabei sind die Temperaturgradienten wesentlich größer als sie bei Verfahren nach dem Stand der Technik realisiert werden. Dies führt dazu, daß sich andere Kristallstrukturen in den ausgehärteten Partikeln einstellen, als diese in klassischer Schokolade oder klassischen kakaohaltigen Fettzusammensetzungen erwünscht sind. Dies führt zwar dazu, daß beispielsweise die Oberfläche der erfindungsgemäß hergestellten Partikel nach einigen Tagen stumpf und matt wird, diese Eigenschaft ist jedoch dann nicht als nachteilig anzusehen, wenn die Schokoladenpartikel beispielsweise innerhalb eines wässrigen, nicht gefrorenen Mediums eingesetzt werden sollen. Sobald die Partikel nämlich mit einem Flüssigkeitsfilm benetzt sind, erscheinen sie für den Betrachter ebenso glänzend wie die konventionell hergestellten Partikel, die auch im "trockenen" Zustand diesen Glanz besitzen. Ein besonders bevorzugter Einsatzfall der nach dem erfindungsgemäßen Verfahren hergestellten Schokoladenpartikel ist daher die Verwendung in Verbindung mit wässrigen, nicht gefrorenen Medien, wie beispielsweise in Fruchtzubereitungen für Joghurt oder andere gesäuerte Milchprodukte oder auch für den Einsatz in SüBdesserts, wie Pudding, Mousse oder ähnlichen.

Der sich ergebende hohe Temperaturgradient bei dem Verfahren nach der Erfindung gestattet sehr kurze Abkühlzeiten, woraus wiederum der große Vorteil resultiert, daß Vorrichtungen zur Durchführung des erfindungsgemäßen Verfahrens im Vergleich mit konventionellen Vorrichtungen eine sehr geringe Baugröße besitzen. Erst diese geringe Baugröße ermöglicht eine wirtschaftliche Produktion keimarmer, insbesondere pasteurisierter oder steriler Schokoladenpartikel, wie sie für den bevorzugten Einsatz der Partikel in Verbindung mit wässrigen Medien zur Erzielung befriedigender mikrobiologischer Eigenschaften unerläßlich ist. Die geringe Baugröße der Kühlwalze oder des Kühlbandes oder einer Kombination der beiden vorgenannten Bauteile ermöglicht es erst, daß die Aufgabe und zumindest teilweise Aushärtung der Schokolade in einem abgeschlossenen, sterilisierbaren oder pasteurisierbaren Behältnis erfolgen kann. Lediglich mit Hilfe einer derartigen Kapselung beispielsweise innerhalb eines Druckkessels läßt sich eine unter sterilen Bedingungen ablaufende Produktion auf Dauer gewährleisten, ohne daß hierzu Reinraumbedingungen in der gesamten Umgebung der zur Durchführung des Verfahrens verwendeten Vorrichtung erforderlich wären. So kann das abgeschlossene Behältnis, innerhalb dessen Aufgabe und zumindest Teilaushärtung der Schokolade erfolgen, vor Beginn der Produktion auf herkömmliche Weise mit vergleichsweise geringem Aufwand pasteurisiert oder sterilisiert werden, wobei aufgrund der Abgeschlossenheit des Produktionsvorgangs innerhalb des Behältnisses bei laufender Herstellung keine erneute Verkeimung zu befürchten ist, so lange die auszuformende flüssige Schokolade in sterilisierter oder pasteurisierter Form eingesetzt wird.

Das erfindungsgemäße Verfahren erlaubt somit erstmals auf kostengünstige Weise die Herstellung pasteurisierter oder sterilisierter Schokoladenpartikel, wie sie für den Einsatz in wässrigen Medien aufgrund der mikrobiellen Erfordernisse unverzichtbar sind. Auch wenn diese Partikel aufgrund der großen Abkühlgeschwindigkeit gewisse Eigenschaften konventionell hergestellter Schokoladenpartikel nicht aufweisen, so sind diese abweichenden Eigenschaften insbesondere im Hinblick auf den bevorzugten Verwendungszweck der Partikel nicht von Nachteil. Besonders vorteilhaft ist der geringe Raumbedarf bei Verwendung einer zur Durchführung des erBndungsgemäßen Verfahrens geeigneten Vorrichtung, da nur auf diese Weise eine kostengünstige Produktion unter sterilen Bedingungen möglich ist.

Die Abkühlgeschwindigkeit läßt sich weiter steigern und somit der benötigte Bauraum weiter senken, wenn die Oberfläche der Kühlwalze oder des Kühlbandes im Bereich der Aufgabe der Schokolade kleiner als - 20°C, vorzugsweise kleiner als - 50°C, und/oder die Temperatur eines die Kühlwalze oder das Kühlband umgebenden Gases kleiner als - 20°C vorzugsweise kleiner als - 50°C ist. In diesem Falle ist es möglich, daß die Aushärtung der Schokolade im wesentlichen vollständig bereits auf einer Kühlwalze mit vertretbarem Durchmesser stattfindet, so daß auf ein anschließendes Kühlband - falls gewünscht - ganz verzichtet werden kann.

Die Erfindung weiter ausgestaltend wird vorgeschlagen, daß die Schichtdicke des auf eine Kühlwalze aufgebrachten Films oder der auf eine Kühlwalze aufgebrachten Streifen durch Veränderung der Temperatur des aufgegebenen flüssigen Schokolade eingestellt wird. Hier bietet sich insbesondere die Verwendung eines am Außenmantel der Kühlwalze befestigten Aufgabetrichters an, an dem sich ein sich über die gesamte Breite der Kühlwalze erstreckendes Bad der flüssigen Schokolade einstellt. Aus diesem Bad wird aufgrund der niedrigen Temperatur der Oberfläche der Kühlwalze ein Film oder Streifen der Schokolade mitgenommen, da an der Walzenoberfläche die Kristallisation einer dünnen Schicht stattfindet. In Abhängigkeit von der Viskosität der flüssigen Schokolade, d. h. von dessen Temperatur, haftet an der auskristallisierten Schicht eine mehr oder weniger dicke, halbflüssige bzw. flüssige Schicht an, die infolge der Walzenrotation aus dem Bad weg transportiert wird und in Folge eines zusätzlichen konvektiven Wärmeübergangs an der der Kühlwalze abgewandten Oberfläche sowie aufgrund weiterer Wärmeleitung in die Kühlwalze weiter aushärtet, bis sie im wesentlichen vollständig auskristallisiert ist.

Gemäß einer Ausgestaltung der Erfindung besitzt die Schokolade einen Gehalt an Kakaobutter von mindestens 50%. Vorzugsweise handelt es sich bei der Schokolade um Schokolade, bei der nach den gesetzlichen Vorgaben ein Mindestzuckergehalt von 3% vorgeschrieben ist.

Eine Weiterbildung des erfindungsgemäßen Verfahrens besteht darin, daß der Innenraum eines Behältnisses von einem Kühlgas durchströmt wird. Der konvektive Wärmeübergang auf der dem Walzenmantel oder der dem Kühlband abgewandten Oberfläche des Schokoladenfilms bzw. der Schokoladenstreifen wird hierdurch spürbar erhöht. Als Kühlgas können vorzugsweise Stickstoff, Kohlendioxid, Argon oder Luft verwendet werden.

Um ein Mitreißen der ausgebildeten Schokoladenpartikel durch das Kühlgas entgegen der Förderrichtung derselben innerhalb des Behältnisses zu vermeiden, ist es sinnvoll, das Kühlgas im Gleichstrom zur Bewegungsrichtung der Schokolade durch das abgeschlossene Behältnis zu führen.

Um insbesondere bei teuren Kühlgasen die Betriebskosten gering zu halten sowie um auch die Energieverluste zu minimieren, sollte das Kühlgas zumindest teilweise im Kreislauf geführt werden.

Die der Erfindung zugrunde liegende Aufgabe wird auch durch die Verwendung einer Vorrichtung für die Herstellung von Partikeln aus Schokolade gelöst, wobei mit Hilfe der Vorrichtung die in flüssiger Form vorliegende Schokolade mittels einer Dosiereinrichtung in Form eines Filmes oder in Form von Streifen auf die Oberfläche einer rotierenden Kühlwalze aufbringbar ist und anschließend eine Ablösung der zumindest teilweise ausgehärteten Schokolade von der Kühlwalze erfolgt und wobei im Falle eines Filmes oder endloser Streifen nach der Auskristallisation eine Zerkleinerung auf die gewünschte Partikelgröße durchführbar ist, wobei die flüssige Schokolade bei ihrer Aufgabe auf die Kühlwalze in sterilisierter oder pasteurisierter Form vorliegt, wobei die Kühlwalze einen inneren Hohlraum aufweist, der von demselben Kühlmedium durchströmbar ist, das die äußere Oberfläche der Kühlwalze umgibt, wobei die Vorrichtung insgesamt in einem sterilisierbaren oder pasteurierbaren B e-hältnis gekapselt ist, wobei des weiteren die Schokolade auf der Kühlwalze im wesentlichen vollständig auskristallisierbar ist.

Aufgrund der Verwendung der vollständig gekapselten Anordnung der Vorrichtung läßt sich diese vor Beginn der Produktion auf einfache Weise pasteurisieren oder sterilisieren, so daß im Falle einer Aufgabe einer pasteurisierten oder sterilisierten Schokolade mit vergleichsweise geringem Aufwand eine Produktion unter sterilen Bedingungen durchführbar ist. Aufgrund der im wesentlichen vollständigen Auskristallisierung der Schokolade auf der Kühlwalze ist ein Verzicht auf ein zusätzliches, der Kühlwalze nachgeschaltetes Kühlband möglich, wodurch der erforderliche Bauraum gegenüber herkömmlichen Vorrichtungen sinkt und eine gekapselte Unterbringung - insbesondere in einem druckfesten Behältnis - erst wirtschaftlich möglich ist. Die hohen Abkühlgeschwindigkeiten, die bei einer vollständigen Aushärtung auf der Kühlwalze erforderlich sind, werden ermöglicht durch die Durchströmung des inneren Hohlraums der Kühlwalze mit demselben Kühlmedium, das die äußere Oberfläche der Kühlwalze umgibt und somit für einen konvektiven Wärmeübergang mit der der Kühlwalze abgewandten Oberfläche des Schokoladenfilms bzw. des Schokoladenstreifens sorgt. Im Gegensatz zu einer Durchströmung der Kühlwalze von einer Kühlsohle, wie dies nach dem Stand der Technik üblich ist, lassen sich mit Hilfe einer Durchströmung mittels eines gasförmigen Mediums mit entsprechend niedrigen Temperaturen höhere Wärmeübergänge erzielen, insbesondere wenn die Wandstärke der Kühlwalze sehr gering ist. Außerdem sinkt durch die Verwendung eines einzigen Kühlmediums sowohl für das Innere als auch für die Umgebung der Kühlwalze der Bauaufwand der erfindungsgemäßen Vorrichtung.

Vorzugsweise ist die Kühlwalze axial von dem Kühlmedium durchströmbar.

Die Dosiereinrichtung läßt sich vergleichsweise einfach, beispielsweise in Form eines sich über die Breite der Kühlwalze erstreckenden beheizbaren Aufgabetrichters mit einem sich darin ausbildenden Bad der flüssigen Schokolade ausführen, wenn die flüssige Schokolade in einem Bereich aus der Dosiereinrichtung auf die Kühlwalze aufbringbar ist, in dem der einem Punkt auf der Walzenoberfläche zugeordnete Geschwindigkeitsvektor eine Komponente aufweist, die der Schwerkraft entgegengesetzt ist. In diesem Fall wird durch Auskristallisation eines dünnen Films auf der Walzenoberfläche ein von der Viskosität der Schokolade abhängiger entsprechend dickerer Film aus dem Bad der Schokolade heraus mitgeführt, ohne daß zur Regulierung der Schichtdicke mechanische Mittel, wie beispielsweise eine Kalibrierwalzc, erforderlich wären.

Da insbesondere bei Temperaturen der Walzenoberfläche von kleiner als -10°C kein Anhaften der flüssigen Schokolade, sondern eine Art Abperleffekt festzustellen ist, wird nach der Erfindung noch vorgeschlagen, daß die Oberfläche der Kühlwalze, die mit der flüssigen Schokolade in Kontakt kommt, Vertiefungen mit einer Tiefe zwischen 0,1mm und 0,5 mm aufweist. Bei einer solchermaßen angerauhten Oberfläche kann auch bei sehr tiefen Oberflächentemperaturen ein Anhaften der flüssigen Schokolade gewährleistet werden.

Die Erfindung weiter ausgestaltend ist vorgesehen, daß die Kühlwalze mit einer Riffelung versehen ist, die parallel zu der Drehachse der Kühlwalze verläuft und im Querschnitt eine Teilung von 3 mm bis 10 mm besitzt. Eine derartige, in Längsrichtung verlaufende Riffelung läßt sich auf einfache Weise mit Hilfe einer Fräsbearbeitung der Kühlwalze erzielen.

Schließlich besteht eine vorteilhafte Weiterbildung der Erfindung noch darin, daß das Behältnis mindestens bis 2 bar, vorzugsweise bis 3 bar - jeweils absolut gemessen - druckfest ist. Hierdurch lassen sich die für eine Sterilisierung erforderlichen Temperaturen vergleichsweise niedrig halten, so daß Kunststoffmaterialien, wie sie beispielsweise für Dichtungszweckel benötigt werden, nicht geschädigt werden.

Das erfindungsgemäße Verfahren wird nachfolgend anhand eines Ausführungsbeispiels einer zu dessen Durchführung geeigneten Vorrichtung, die in der Zeichnung dargestellt ist, näher erläutert. Es zeigt:
- Fig. 1: einen schematischen Schnitt durch eine Vorrichtung mit Kühlwalze, Kühlband und Zerkleinerungseinrichtung und einer teilweisen Kreislaufführung des gas- formigen Kühlmediums;
- Fig. 2: wie Figur 1, jedoch mit einer vollständigen Kreislaufführung des Kühlmedi- ums;
- Fig. 3: wie Figur 1, jedoch ohne Kühlband;
- Fig. 4: wie Figur 3, jedoch mit vollständiger Kreislaufführung des Kühlmediums und
- Fig. 5: einen Schnitt durch eine Gesamtanlage zur Herstellung von Schokoladenpar- tikeln einschließlich einer Sterilisationsvorrichtung, einer Vorrichtung zum Herstellen von Partikeln, einem Pufferbehälter und einem Mischbehälter.

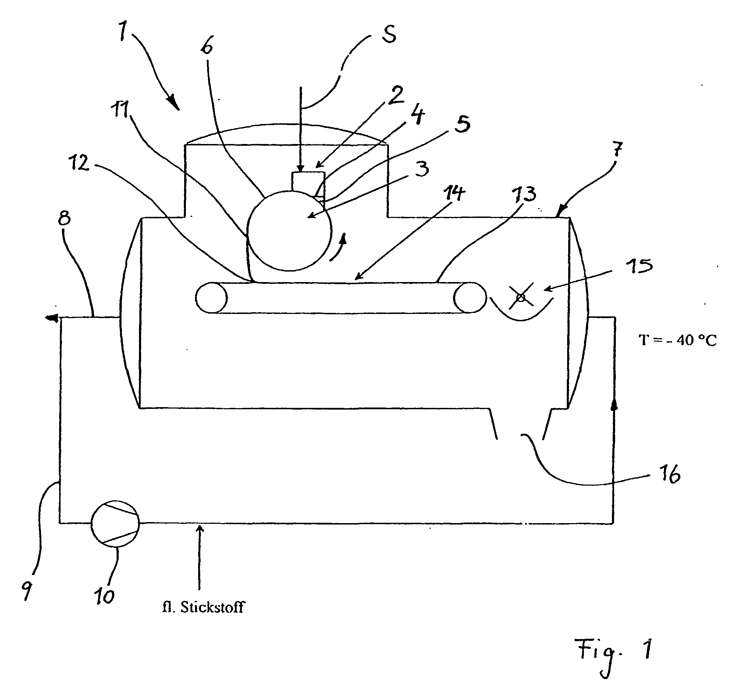

Eine in Figur 1 schematisch dargestellte Vorrichtung 1 zur Herstellung von Schokoladenpartikeln weist eine beheizte Dosiereinrichtung 2 auf, mit der auf eine Kühlwalze 3 ein endloser Film der in flüssiger Form in der Dosiereinrichtung 2 vorliegenden Schokolade aufgebracht werden kann. Die Schokolade wird zuvor chargenweise sterilisiert und anschließend aus einem Vorratsbehälter über eine Zuführleitung S kontinuierlich der Dosiereinrichtung 2 zugeführt, innerhalb derer sich ein Flüssigkeitsspiegel 4 eines Bades 5 ausbildet, das sich im wesentlichen über die gesamte Breite der Kühlwalze 3 erstreckt. Die Temperatur der Schokolade innerhalb des Bades 5 beträgt zwischen 50 °C und 60 °C, wobei sich im Wege einer Veränderung der Aufgabetemperatur die Dicke des sich auf der Kühlwalze 3 einstellenden Schokoladefilms regulieren läßt. Die Schichtdicke beträgt ca. 0,3 bis 2 mm.

Die Temperatur der äußeren Oberfläche 6 der Kühlwalze 3 beträgt ca. -50°C, so daß eine Abkühlung des Schokoladenfilms mit einem vergleichsweise hohen Temperaturgradienten erfolgt und sich an der Oberfläche 6 der Kühlwalze 3 schnell eine auskristallisierte Schicht bildet Die Umfangsgeschwindigkeit der rotierenden Kühlwalze 3 beträgt ca. 0,1 bis 20 Meter pro Minute in Abhängigkeit des Walzendurchmessers, der Aufgabetemperatur der flüssigen Schokolade sowie der Oberflächentemperatur der Kühlwalze und der Umgebungstemperatur.

Die Vorrichtung 1 umfaßt des weiteren ein abgeschlossenes, druckfestes, kesselförmiges Behältnis 7, das vor Aufnahme der Produktion eine Pasteurisierung oder Sterilisierung der gesamten von dem Behältnis 7 umschlossenen Bauteile mit Heißdampf (p > 2 bar, T > 125°C) erlaubt. Alternativ zu einer Sterilisierung mittels Heißdampf ist grundsätzlich auch eine Sterilisierung mittels Heißluft möglich. Da die Temperaturen hier jedoch größer als 180°C sein müssen, ist die Verwendung von aus Kunststoff bestehenden Dichtungsmaterialien nur noch sehr eingeschränkt möglich.

Das Behältnis 7 wird im Gegenstrom von Stickstoff mit einer Temperatur von ca. -40°C im Bereich der Zuführung durchströmt. Mit Hilfe geeigneter, nicht dargestellter Leiteinrichtungen wird dafür gesorgt, daß das Kühlgas den Inneraum der Kühlwalze 3 in axiale Richtung durchströmt. Die Temperatur des Kühlgases im Bereich der Aufgabe der flüssigen Schokolade auf die Kühlwalze 3 beträgt ca. -35° C.

Das Kühlgas wird teilweise im Kreislauf geführt, wobei aus einer Abgasleitung 8 ein Teilvolumenstrom in eine Rückführleitung 9 abgezweigt wird, in der ein Verdichter 10 angeordnet ist. Hinter dem Verdichter 10 wirdflüssiger Stickstoff in die Rückführleitung 9 eingespritzt, so daß aufgrund der Verdampfungkälte eine Rückkühlung des Stickstoffgases auf -40°C vor der Rückführung in das Behältnis 7 eintritt. Zur Reduzierung der Wärmeverluste sind sowohl die Rücklaufleitung 9 als auch das Behältnis 7 isoliert, letzteres mit Hilfe einer Vakuumisolierung.

Der lediglich zum Teil ausgehärtete Schokoladenfilm verläßt die Kühlwalze 3 an der Stelle 11 um an der Stelle 12 auf die Oberfläche 13 eines umlaufenden Kühlbandes 14 übergeben zu werden. Die Oberflächentemperatur des Kühlbandes beträgt an der Übernahmestelle ca. -40° C, so daß es anschließend zu einer weiteren Abkühlung des Schokoladenfilmes kommt. Wie auch im Bereich der Kühlwalze 3 erfolgt einerseits die Wärmeübertragung im Wege einer Wärmeleitung in das Kühlband 14, das im Innern von einer Kühlsohle durchströmt wird, und andererseits im Wege der Konvektion mit dem durch das Behältnis 7 strömenden Stickstoffgas.

Wenn der Schokoladenfilm das Kühlband 13 verläßt, ist die Schokolade vollständig auskristallisiert und gelangt in eine Zerkleinerungseinrichtung 15, in der der Film von Brecherwalzen in Schokoladenpartikel mit gewünschter Größe zerteilt wird. Während die Dicke des Films etwa 0,3 bis 2 mm beträgt, liegen die Längen- und Breitenabmessungen der Partikel etwa im Bereich von 3 mm bis 15 mm. Die Schokoladenpartikel verlassen das Behältnis 7 durch eine trichterförmige Auslaßöffnung 16, die an eine Rohrleitung für den Weitertransport der Partikel angeschlossen ist.

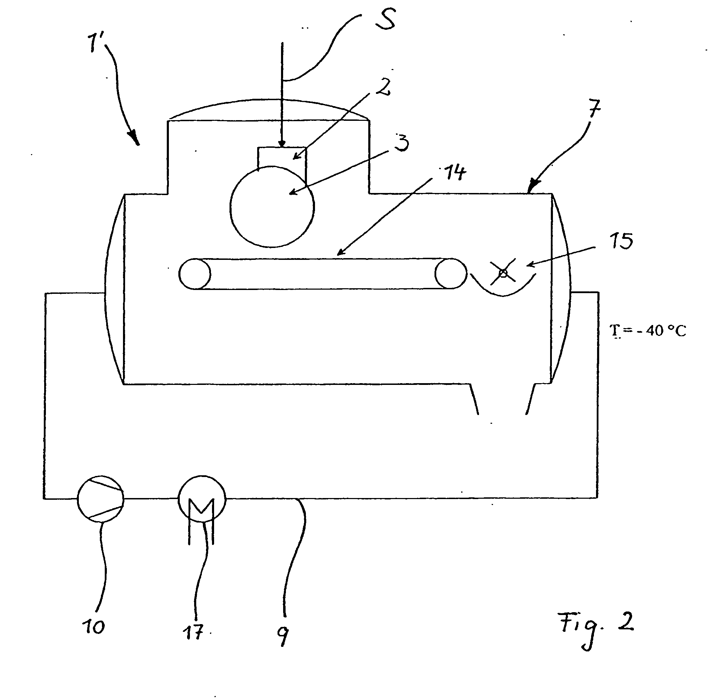

Die Vorrichtung 1' gemäß Figur 2 unterscheidet sich dadurch von der Vorrichtung 1 gemäß Figur 1, daß die Führung des Stickstoffgases vollständig im Kreislauf erfolgt. Hinter dem Verdichter 10 ist zu diesem Zweck in die Rücklaufleitung 9 eine Wärmetauscher 7 integriert, der die Temperaturerhöhung des Stickstoffgases infolge der Abkühlung der flüssigen Schokolade rückgängig macht. Die Zuführung des gasförmigen Stickstoffs in das Behältnis 7 erfolgt auch hier bei ca. -40°C. Das Stickstoffgas verläßt das Behältnis mit einer Temperatur von ebenfalls ca. -35° C.

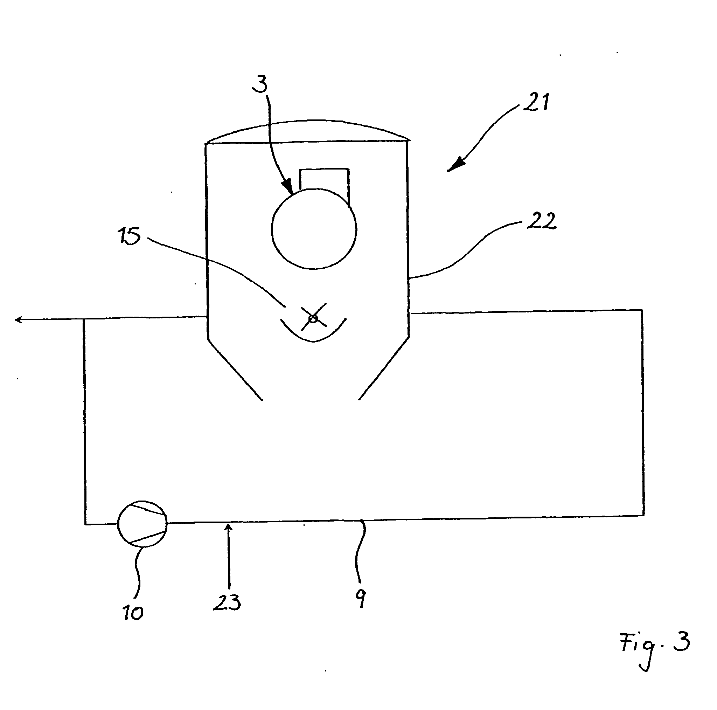

Eine Vorrichtung 21, wie sie in Figur 3 dargestellt ist, besitzt zur Abkühlung der flüssigen Schokolade lediglich eine Kühlwalze 3, der unmittelbar eine Zerkleinerungseinrichtung 15 nachgeschaltet ist. Die vollständige Auskristallisation der flüssigen Schokolade erfolgt hier allein auf der Oberfläche der Kühlwalze 3, ohne daß eine Nachkristallisation auf einem Kühlband erforderlich wäre. Die Oberflächentemperatur der Kühlwalze 3 im Bereich des ersten Kontakts mit der flüssigen Schokolade beträgt in diesem Fall ca. -50° C, weshalb die Temperatur des gasförmigen Stickstoffs beim Eintritt in das gleichfalls druckfest ausgeführte Behältnis 22 bei ungefähr -55° C liegt. Beim Verlassen des Behältnisses 22 beträgt die Temperatur des Stickstoffgases ca. -50° C. Bei der in Figur 3 dargestellten Vorrichtung 21 erfolgt die Führung des Stickstoffgases nur zum Teil im Kreislauf, so daß ein Teil des erwärmten Stickstoffgases als Abgas abgeführt werden muß. Hinter dem Verdichter 10 erfolgt innerhalb der Rücklaufleitung 9 an der mit dem Pfeil 23 gekennzeichneten Stelle eine Einspritzung von flüssigem Stickstoff um eine Rückkühlung zu bewirken.

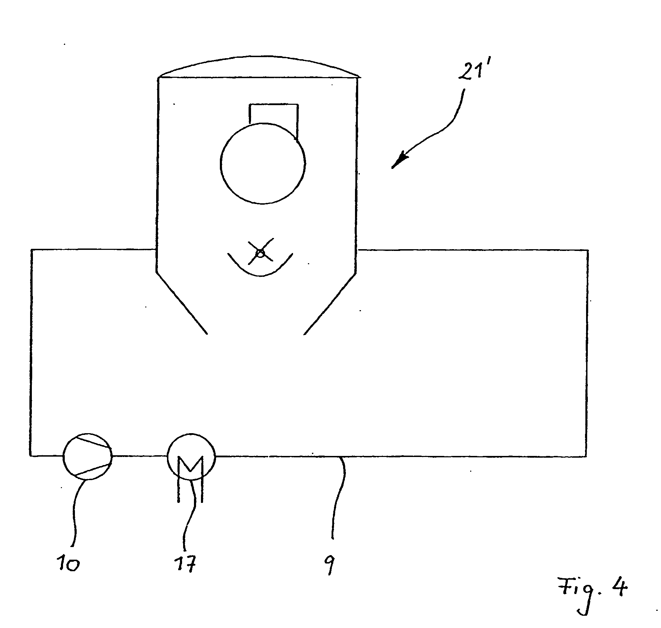

Die in Figur 4 abgebildete Vorrichtung 21' ist im wesentlichen mit der in Figur 3 gezeigten Vorrichtung 21 bis auf die vollständige Kreislauffübrung des Stickstoffgases identisch, weshalb in der Rücklaufleitung 9 - wie bei der Vorrichtung 1' gemäß Figur 2 - ein Wärmetauscher 17 hinter dem Verdichter 10 angeordnet ist.

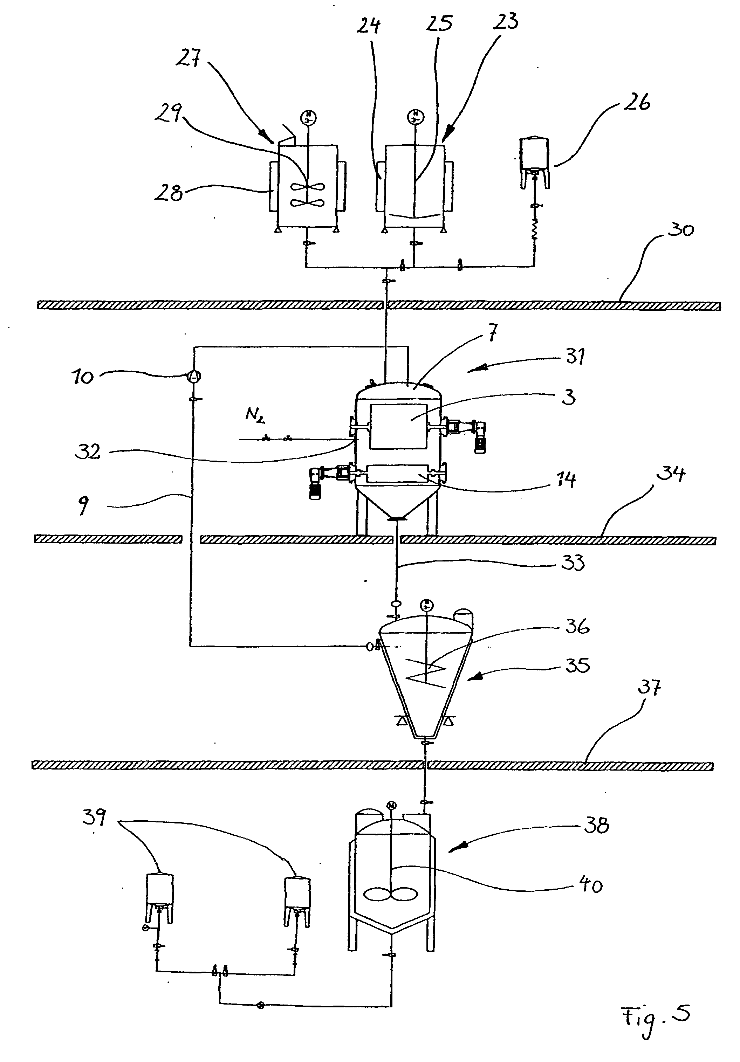

Figur 5 zeigt in einem Vertikalschnitt die Anordnung einer Sterilisationseinrichtung 23, bei der es sich um einen Kocher handelt, dessen Doppelmantel 24 mit Wasserdampf beheizt wird. Mit Hilfe einer Disolverscheibe 25 wird in die flüssige Schokolade Wasserdampf in fein disperser Form eingeführt. Bei der Sterilisationseinrichtung handelt es sich um einen Druckkessel, da die Sterilisation bei einem Druck von ca. 2 bar und einer Temperatur von ca. 125°C erfolgt. Das vorstehend beschriebenen Sterilisationsverfahren ist aus der EP 0 974 275 A1 bekannt. Um die im Anschluß an die chargenweise erfolgende Sterilisation stattfindende Ausformung der Schokoladenpartikel kontinuierlich betreiben zu können, wird aus einem Vorratsbehälter 26 stets nur eine Teilmenge in die Sterilisationseinrichtung 23 gepumpt. Nach erfolgter Sterilisation wird sterilisierte Schokolade in einen Pufferbehälter 27 zwischengelagert, der mittels eines Doppelmantels 28 beheizbar und des weiteren mit einem Rührwerk 29 ausgestattet ist. Durch eine Geschoßdecke 30 hindurch erfolgt die Versorgung einer Vorrichtung 31 zur Ausformung der Partikel, die in ihrem Aufbau im wesentlichen mit den Vorrichtungen 1, 1' und 21, 21' gemäß den Figuren 1 bis 4 übereinstimmt. Die Vorrichtung 31 besitzt eine rotierende Kühlwalze 3 und ein optionales Kühlband 14.

Durch das als Druckkessel ausgeführte Behältnis 7 wird im Gleichstrom zu dem Partikelstrom kaltes Stickstoffgas geleitet, das mit Hilfe eines in einer Rücklaufleitung 9 integrierten Verdichters 10 teilweise im Kreislauf geführt wird. Die Einspeisung flüssigen Stickstoffs zum Ausgleich der Temperaturerhöhung erfolgt an der Stelle 32. Die in Achsrichtung der Kühlwalze 3 gerichtete Einspritzung bewirkt eine axiale Durchströmung des Innenraums der beidseitig offenen Kühlwalze 3, so daß an deren Innenmantel ein guter konvektiver Wärmeübergang stattfindet.

Nach ihrer Zerkleinerung mit Hilfe einer nicht dargestellten Zerkleinerungseinrichtung verlassen die Partikel die Vorrichtung 31 zusammen mit dem Stickstoffgas durch eine Leitung 33, die eine weitere Geschoßdecke 34 durchdringt. Der Schwerkraft folgend, gelangen die Partikel in einen trichterförmigen Pufferbehälter 35, der mit einer Austragsschnecke 36 versehen ist. Nachdem sich der Strömungsquerschnitt für die Partikel und das Stickstoffgas im Kopfbereich des Pufferbehälters 35 schlagartig erweitert hat und somit die Strömungsgeschwindigkeit drastisch abgesunken ist, wird das im Kreis geführte Stickstoffgas durch die gleichfalls im Kopfbereich des Pufferbehälters 35 abzweigende Rückführleitung 9 zurückgeführt. Der nicht im Kreislauf geführte Teil des Stickstoffgases verläßt den Pufferbehälter an einer nicht näher dargestellten Stelle als Abgas.

Von dem Pufferbehälter 35 durch eine weitere Geschoßdecke 37 getrennt, befindet sich ein Mischbehälter 38, in dem die Schokoladenpartikel beispielsweise mit unterschiedlichen Sorten einer Fruchtzubereitung, die in Vorratsbehältern 39 gelagert sind, mittels eines Rührorgans gemischt werden. Der Pufferbehälter 35 erlaubt einen kontinuierlichen Betrieb der Vorrichtung 31 und gestattet des weiteren den Wechsel zwischen verschiedenen Sorten, beispielsweise von Fruchtzubereitungen, die in dem Mischbehälter 38 mit den Schokoladenpartikeln zum Endprodukt vermischt werden. Dieses aus Fruchtzubereitung und Schokoladenpartikeln bestehende Endprodukt wird beispielsweise in Joghurt oder auch Süßdesserts verwendet.

## Patentansprüche

1. Verfahren zur Herstellung von Partikeln aus Schokolade, wobei die in flüssiger Form vorliegende Schokolade in Form eines Films oder in Form von Streifen auf eine Oberfläche einer rotierenden Kühlwalze oder eines bewegten Kühlbandes aufgebracht wird und anschließend eine Ablösung der zumindest teilweise ausgehärteten Schokolade von der Oberfläche der Kühlwalze oder des Kühlbandes erfolgt und wobei im Fall einer Erzeugung eines endlosen Films oder endloser Streifen nach der Aushärtung der Schokolade eine Zerkleinerung auf die gewünschte Partikelgröße erfolgt, **dadurch gekennzeichnet, daß** die Aufgabe und zumindest teilweise Aushärtung der in flüssiger, sterilisierter oder pasteurisierter Form vorliegenden Schokolade innerhalb eines abgeschlossenen, sterilisierbaren oder pasteurisierbaren Behältnisses erfolgt und die Oberfläche der Kühlwalze oder des Kühlbandes im Bereich der Aufgabe der Schokolade kleiner als 0 °C und/ oder die Temperatur eines die Kühlwalze oder das Kühlband umgebenden Gases im Bereich der Aufgabe der Schokolade kleiner als 0 °C ist.

2. Verfahren nach Anspruch 1, **dadurch gekennzeichnet, daß** die Oberfläche der Kühlwalze oder des Kühlbandes im Bereich der Aufgabe der Schokolade kleiner als -20°C und/oder die Temperatur eines die Kühlwalze oder des Kühlband umgebenden Gases kleiner als -20°C ist.

3. Verfahren nach Anspruch 2, **dadurch gekennzeichnet, daß** die Oberfläche der Kühlwalze oder des Kühlbandes im Bereich der Aufgabe der Schokolade kleiner als -50°C und/oder die Temperatur eines die Kühlwalze oder des Kühlband umgebenden Gases kleiner als -50°C ist.

4. Verfahren nach einem der Ansprüche 1 bis 3, **dadurch gekennzeichnet, daß** die flüssige Schokolade auf eine rotierende Kühlwalze aufgebracht wird, und daß die Schokolade zum Zeitpunkt ihrer Ablösung von der Walze im wesentlichen vollständig auskristallisiert ist

5. Verfahren nach einem der Ansprüche 1 bis 4, **dadurch gekennzeichnet, daß** die Schichtdicke des auf die Kühlwalze aufgebrachten Films oder die Schichtdicke der auf die Kühlwalze aufgebrachten Streifen durch Veränderung der Temperatur der aufgegebenen flüssigen Schokolade eingestellt wird.

6. Verfahren nach einem der Ansprüche 1 bis 5, **dadurch gekennzeichet, daß** die Schokolade einen Gehalt an Kakaobutter von mindestens 50% besitzt.

7. Verfahren nach einem der Ansprüche 1 bis 6, **dadurch gekennzeichnet, daß** der Innenraum des Behältnisses von einem Kühlgas durchströmt wird.

8. Verfahren nach Anspruch 7, **dadurch gekennzeichnet, daß** als Kühlgas Stickstoff, Kohlendioxid, Argon oder Luft verwendet wird.

9. Verfahren nach Anspruch 7 oder 8, **dadurch gekennzeichnet, daß** das Kühlgas im Gleichstrom oder im Gegenstrom zur Bewegungsrichtung der Schokolade geführt wird.

10. Verfahren nach einem der Ansprüche 7 bis 9, **dadurch gekennzeichnet, daß** das Kühlgas zumindest teilweise im Kreislauf geführt wird.

11. Verwendung einer Vorrichtung (1, 1', 21, 21', 31) für die Herstellung von Partikeln aus Schokolade, wobei mit Hilfe der Vorrichtung die in flüssiger Form vorliegende Schokolade mittels einer beheizbaren Dosiereinrichtung (2) in Form eines Filmes oder in Form von Streifen auf die Oberfläche (6) einer rotierenden Kühlwalze (3) aufbringbar ist und anschließend eine Ablösung der zumindest teilweise ausgehärteten Schokolade von der Kühlwalze (3) erfolgt, wobei in einer Erzeugung eines endlosen Films oder endloser Streifen die Schokolade nach ihrer vollständigen Aushärtung mittels einer Zerkleinerungseinrichtung (15) auf die gewünschte Partikelgröße zerkleinerbar ist, **dadurch gekennzeichnet, daß** die flüssige Schokolade bei ihrer Aufgabe auf die Kühlwalze (3) in sterilisierter oder pasteurisierter Form vorliegt, daß die Kühlwalze (3) einen inneren Hohlraum aufweist, der von demselben Kühlmedium durchströmbar ist, das die äußere Oberfläche (6) der Kühlwalze (3) umgibt, daß die Schokolade auf der Kühlwalze (3) vollständig auskristallisierbar ist und daß die Vorrichtung (1, 1', 21, 21', 31) in einem sterilisierbaren oder pasteurisierbaren Behältnis (7) gekapselt ist.

12. Verwendung nach Anspruch 11, wobei die Kühlwalze (3) axial von dem Kühlmedium durchströmbar ist.

13. Verwendung nach Anspruch 11, **dadurch gekennzeichnet, daß** die flüssige Schokolade in einem Bereich aus der beheizbaren Dosiereinrichtung (2) auf die Kühlwalze (3) aufbringbar ist, indem der einem Punkt auf der Walzenoberfläche zugeordnete Geschwindigkeitsvektor eine Komponente aufweist, die der Schwerkraft entgegengesetzt ist.

14. Verwendung nach einem der Ansprüche 11 bis 13, **dadurch gekennzeichnet, daß** die Oberfläche (6) der Kühlwalze (3), die mit der flüssigen Schokolade in Kontakt kommt, Vertiefungen mit einer Tiefe zwischen 0,1 mm und 0,5 mm aufweist.

15. Verwendung nach Anspruch 14, **dadurch gekennzeichnet, daß** die Kühlwalze (3) mit einer Riffelung versehen ist, die parallel zu der Drehachse der Kühlwalze (3) verläuft und im Querschnitt eine Teilung von 3 mm bis 10 mm besitzt.

16. Verwendung nach einem der Ansprüche 11 bis 15, **dadurch gekennzeichnet, daß** das Behältnis (7) mindestens bis zu einem Druck von 2 bar, vorzugsweise bis 3 bar, jeweils absolut gemessen, druckfest ist.

## Claims

1. A method for making chocolate particles, with the chocolate present in liquid form being applied in the form of a film or in the form of strips onto a surface of a rotating cooling roller or a moved cooling belt, and thereafter a detachment of the at least partly hardened chocolate occurring from the surface of the cooling roller or the cooling belt, and with there being a comminution to the desired particle size after the hardening of the chocolate in the case of producing an endless film or endless strips, **characterized in that** the charging and at least partial hardening of the chocolate present in liquid, sterilized or pasteurized form occurs within an enclosed, sterilizable or pasteurizable container and the surface of the cooling roller or cooling belt is lower than 0°C in the charging region of the chocolate and/or the temperature of a gas encompassing the cooling roller or the cooling belt is lower than 0°C in the charging region.

2. A method according to claim 1, **characterized in that** the surface of the cooling roller or the cooling belt in the region of the charging of the chocolate is less than -20°C and/or the temperature of a gas encompassing the cooling roller or the cooling belt is lower than -20°C.

3. A method according to claim 2, **characterized in that** the surface of the cooling roller or the cooling belt in the region of the charging of the chocolate is less than -50°C and/or the temperature of a gas encompassing the cooling roller or the cooling belt is lower than -50°C.

4. A method according to one of the claims 1 to 3, **characterized in that** the liquid chocolate is applied onto a rotating cooling roller, and that the chocolate is substantially fully crystallized out at the time of its detachment from the roller.

5. A method according to one of the claims 1 to 4, **characterized in that** the layer thickness of the film applied onto the cooling roller or the layer thickness of the strips applied onto the cooling roller is set by changing the temperature of the charged liquid chocolate.

6. A method according to one of the claims 1 to 5, **characterized in that** the chocolate has a content of cocoa butter of at least 50%.

7. A method according to one of the claims 1 to 6, **characterized in that** the inner space of the container is flowed through by a cooling gas.

8. A method according to claim 7, **characterized in that** nitrogen, carbon dioxide, argon or air is used as a cooling gas.

9. A method according to claim 7 or 8, **characterized in that** the cooling gas is guided in cocurrent flow or counter-flow relative to the direction of movement of the chocolate.

10. A method according to one of the claims 7 to 9, **characterized in that** the cooling gas is guided at least partly in a circulation.

11. The use of an apparatus (1, 1', 21, 21', 31) for the production of chocolate particles, with the chocolate present in liquid form being applicable with the help of the apparatus by means of a heatable dosing device (2) in the form of a film or in the form of strips onto the surface (6) of a rotating cooling roller (3) and thereafter a detachment occurring from the cooling roller (3) of the at least partly hardened chocolate, with the chocolate, in the event of a production of an endless film or endless strips, being capable of being comminuted after its complete hardening to the desired particle size by means of a comminution device (15), **characterized in that** the liquid chocolate is present in sterilized or pasteurized form during its charging to the cooling roller (3), that the cooling roller (3) comprises an inner hollow space which can be flowed through by the same cooling medium encompassing the outer surface (6) of the cooling roller (3), that the chocolate can be fully crystallized out on the cooling roller (3) and that the apparatus (1, 1', 21, 21', 31) is encapsulated in a sterilizable or pasteurizable container (7).

12. A use according to claim 11, wherein the cooling roller (3) can be flowed through axially by the cooling medium.

13. A use according to claim 11, **characterized in that** the liquid chocolate can be applied in a region from the heatable dosing device (2) onto the cooling roller (3), such that the speed vector associated with a point on the roller surface comprises a component which is opposite of gravity.

14. A use according to one of the claims 11 to 13, **characterized in that** the surface (6) of the cooling roller (3) which comes into contact with the liquid chocolate comprises recesses with a depth of between 0.1 mm and 0.5 mm.

15. A use according to claim 14, **characterized in that** the cooling roller (3) is provided with a ribbing which extends parallel to the rotational axis of the cooling roller (3) and has a division of 3 mm to 10 mm in the cross section.

16. A use according to one of the claims 11 to 15, **characterized in that** the container (7) is pressure-proof up to a pressure of 2 bars, preferably 3 bars, each measured absolutely.

## Revendications

1. Procédé de réalisation de particules de chocolat, selon lequel on applique le chocolat liquide sous forme de pellicule ou de bandes sur la surface d'un rouleau réfrigéré tournant ou d'une bande réfrigérée entraînée et on décolle ensuite le chocolat du moins partiellement durci de la surface du rouleau réfrigéré ou de la bande réfrigérée et selon lequel, en cas de réalisation d'une pellicule ou d'une bande sans fin, on réduit le chocolat durci en particules ayant la taille souhaitée, **caractérisé en ce que** l'alimentation en chocolat et le durcissement du moins partiel du chocolat liquide stérilisé ou pasteurisé a lieu à l'intérieur d'un récipient fermé, stérilisable ou pasteurisable et que la surface du rouleau réfrigéré ou de la bande réfrigérée a une température inférieure à 0 °C à la hauteur de l'endroit d'arrivée du chocolat et/ou que la température d'un gaz entourant le rouleau réfrigéré ou la bande réfrigérée à la hauteur de l'endroit d'arrivée du chocolat est inférieure à 0 °C.

2. Procédé selon la revendication 1, **caractérisé en ce que** la surface du rouleau réfrigéré ou de la bande réfrigérée a une température inférieure à -20 °C à la hauteur de l'endroit d'arrivée du chocolat et/ou que la température d'un gaz entourant le rouleau réfrigéré ou la bande réfrigérée est inférieure à -20 °C.

3. Procédé selon la revendication 2, **caractérisé en ce que** la surface du rouleau réfrigéré ou de la bande réfrigérée a une température inférieure à -50 °C à la hauteur de l'endroit d'arrivée du chocolat et/ou que la température d'un gaz entourant le rouleau réfrigéré ou la bande réfrigérée est inférieure à -50 °C.

4. Procédé selon l'une quelconque des revendications 1 à 3, **caractérisé en ce que** l'on applique le chocolat liquide sur un rouleau réfrigéré tournant et que le chocolat est sensiblement complètement cristallisé au moment où on le décolle du rouleau.

5. Procédé selon l'une quelconque des revendications 1 à 4, **caractérisé en ce que** l'épaisseur de couche de la pellicule appliquée sur le rouleau réfrigéré ou l'épaisseur de couche des bandes appliquées sur le rouleau réfrigéré est ajustée en changeant la température du chocolat liquide amené.

6. Procédé selon l'une quelconque des revendications 1 à 5, **caractérisé en ce que** le chocolat a une teneur minimum en beurre de cacao de 50 %.

7. Procédé selon l'une quelconque des revendications 1 à 6, **caractérisé en ce que** l'intérieur du récipient est traversé par un gaz réfrigérant.

8. Procédé selon la revendication 7, **caractérisé en ce que** l'on utilise comme gaz réfrigérant de l'azote, du dioxyde de carbone, de l'argon ou de l'air.

9. Procédé selon la revendication 7 ou 8, **caractérisé en ce que** le gaz réfrigérant circule dans le même sens ou dans le sens contraire à la direction de mouvement du chocolat.

10. Procédé selon l'une quelconque des revendications 7 à 9, **caractérisé en ce que** le gaz réfrigérant circule du moins en partie dans un circuit.

11. Utilisation d'un dispositif (1, 1', 21, 21', 31) destiné à la réalisation de particules de chocolat avec l'aide duquel on peut appliquer, au moyen d'une doseuse (2) apte à être chauffée, le chocolat liquide sous forme de pellicule ou de bandes sur la surface (6) d'un rouleau réfrigéré (3) tournant, le chocolat du moins partiellement durci étant ensuite décollé du rouleau réfrigéré (3), le chocolat complètement durci étant destiné à être réduit en particules ayant la taille souhaitée au moyen d'un concasseur (15) dans le cas de réalisation d'une pellicule ou d'une bande sans fin, **caractérisée en ce que** le chocolat liquide est appliqué sur le rouleau réfrigéré (3) à l'état stérilisé ou pasteurisé, que le rouleau réfrigéré (3) comporte une cavité intérieure destinée à être traversée par le même réfrigérant qui entoure la surface extérieure (6) du rouleau réfrigéré (3), que le chocolat est apte à cristalliser complètement sur le rouleau réfrigéré (3) et que le dispositif (1, 1', 21, 21', 31) est hermétiquement scellé dans un récipient (7) stérilisable ou pasteurisable.

12. Utilisation selon la revendication 11, le rouleau réfrigéré (3) étant destiné à être traversé axialement par le réfrigérant.

13. Utilisation selon la revendication 11, **caractérisée en ce que** le chocolat liquide contenu dans la doseuse (2) apte à être chauffée est destiné à être appliqué sur le rouleau réfrigéré (3), le vecteur vitesse associé à un point situé à la surface du rouleau comportant une composante opposée à la force de gravité.

14. Utilisation selon l'une quelconque des revendications 11 à 13, **caractérisée en ce que** la surface (6) du rouleau réfrigéré (3) venant au contact du chocolat liquide comporte des renfoncements d'une profondeur comprise entre 0,1 mm et 0,5 mm.

15. Utilisation selon la revendication 14, **caractérisée en ce que** le rouleau réfrigéré (3) est cannelé, les cannelures étant parallèles à l'axe de rotation du rouleau réfrigéré (3) et ayant une section transversale comportant une division comprise entre 3 et 10 mm.

16. Utilisation selon l'une quelconque des revendications 11 à 15, **caractérisée en ce que** le récipient (7) résiste à une pression d'au moins 2 bar absolu, de préférence de jusqu'à 3 bar absolu.
